# EUROPEAN PATENT SPECIFICATION

(11) **EP 0 688 256 B1**
(45) Date of publication and mention of the grant of the patent: **28.05.1997**
(21) Application number: 94909330.6
(22) Date of filing: 24.02.1994
(51) Int. Cl.: B23Q 1/25, G01B 7/00

(54) **MEASURING DEVICE PROVIDED WITH A SUPPORTING ELEMENT**
MESSVORRICHTUNG MIT EINEM TRAGELEMENT
DISPOSITIF DE MESURE POURVU D'UN ELEMENT SUPPORT

(30) Priority: 24.02.1993 NL 9300343
(43) Date of publication of application: 27.12.1995
(73) Proprietor: H. PRONK BEHEER B.V., NL-3900 AC Veenendaal (NL)
(72) Inventor: PRONK, Hendrikus, NL-3904 PK Veenendaal (NL)
(74) Representative: Land, Addick Adrianus Gosling
(86) International application number: NL9400047
(87) International publication number: WO9419146

(56) References cited:
- EP-A- 0 193 991
- DE-A- 3 520 685

## Description

In taking measurements of objects such as shafts and the like, the measurements have to be taken with a high degree of accuracy, as they are often in the order of a few micrometers. Highly reliable measurements need to be able to be taken by repeated use of the same instrument for a set of different objects, as well as by different instruments for different objects.

In practice, a point or an end of a measuring probe, a so called linear measuring sensor, is brought into contact with the subject. Such a sensor can, for example, with the aid of displacement of a coil core bar accurately measure such an object. However, the measuring probes of these sensors are very fragile.

For example from the European patent application EP-A-0 181 460 it is known to place the end of a measuring element arm, which is spaced away from the body of the measuring element, against the object to be measured instead of the tip of the measuring element itself. However due to the length of the arm and any curvature therein, inaccuraces can occur in the measured results. Hence, the measured results have to be corrected to take into consideration the difference in distance between the end of the arm, with respects to hinge point of the arm, and the distance of the sensor with respects to the hinge point.

In DE-A-3520685 a device for measuring or sensing an object, for example a shaft, comprising: a supporting element including a fixed part securable in a fixed position relative to the object, two arms which are slightly spring moveable relative to the fixed part and extend on both sides of the fixed part, and a connecting part connecting said two arms, a measuring or sensing element comprising two parts, a first of said parts being coupled to the fixed part of the supporting element. This known arrangement shows a measuring element spaced from a sensing pin, so that damage to the fragile sensing element is prevented. This known arrangement, however, also has two separate leaf springs. The connection between the leaf springs and the supporting element gives rise to inaccuracies in the measuring device and necessitates additional assembling of the separate parts.

It is an object of the present invention to improve upon the above known measuring device and/or to provide a more accurate measuring device and enabling an inexpensive manufacture of such measuring device.

The present invention provides a device for measuring or sensing an object, for example a shaft, comprising: a supporting element including a fixed part securable in a fixed position relative to the object, two arms which are slightly spring moveable relative to the fixed part and which extend on both sides of the fixed part, a connecting part connecting said two arms, and a measuring or sensing element comprising two parts a first of said parts being coupled to the fixed part of the supporting element, characterised in that:
- said two arms together with the fixed part are formed from one piece;
- the second part of said measuring or sensing element is secured to one of the arms; and
- an adjustable pin is secured within the connecting part near to and substantially parallel to the measuring or sensing element.

As such a fixed part and two arms formed together from one piece, is known from EP-A-0193991. This document, however, is related to a fine adjusting device for accurate positioning of an adjusting element, and therefor does not concern a measuring device and therefor does not disclose the measuring element and the adjustable pin in the relative positions.

Use of a measuring device according to the present invention avoids bringing into contact any part of a fragile measuring element with the subject to be sensed and/or avoids the fact that inaccuraces due to distortion of the supporting element material affects the accuracy of the measured results. The supporting elements and the measuring device according to the present invention are able to be produced for a relatively low cost.

Further characteristics, advantages and details of the present invention will become clear with respects to the following description and the accompanying diagram, wherein a partially broken away perspective view of a preferred embodiment of the invention is shown.

A supporting part 1 comprises a fixed part 2 which is secured to a frame 3. A shaft A or any other object from which the measurement d has to be taken, is also harnessed to the frame 3. The supporting element 1 further comprises two arms 3, 4 resp., which are made out of one piece along with the fixed part 2 and which are spring moveable with respects to the fixed part 2. The two arms 3, 4 are connected to each other via a connecting piece 5, wherein a pin 6 is held in position with the aid of a screw thread. In arm 4, near the connecting piece 5, a first part 8 of a schematically shown measuring element 7 is secured, from which a second part 9 is secured in the fixed part 2.

In the present embodiment the first part 8 of the measuring element comprises a core or magnetic bar 10 which is moveable in an axial direction in a, not shown in the diagram, coil which is part of the second part 9 of the measuring element.

On sensing or measuring the shaft A, the pin 6 is brought into contact with the shaft A, so that adjustment of the pin 6 gives a first indication of the measurement d. The measurement d is accurately ascertained by the position of the magnetic bar 10 with respects to the part 9 of the measuring element, whose position is exactly stationary with respects to the fixed part 2 of the supporting element and thus also the object A. The position of the magnetic bar accurately agrees with the position of the measuring pin 6, due to the fact that the connecting piece 5 passes through the two parallel arms 3 and 4. Part 8 of the measuring element 7 is secured near to the connecting piece 5 in the arm 4, in order to increase the correlation between the pin 6 its position and the magnetic bar 10.

The arms 3, 4 are preferably symmetrically aligned with respects to the median plane of the fixed part 2. Furthermore the arms 3, 4 are preferably provided with openings 11 and 12 near the connection with the fixed part 2 and the connecting part 5, so that the movement of the arms 3, 4 with respects to the fixed part 2 is large enough.

Not shown is a preferably harmonica like rubber or synthetic sleeve which is associated with the measuring element 9 between the arm 4 and the fixed part 2 in order to prevent the entry of dust etc.

The requested rights are not determined by the hereabove described embodiment, but are rather determined by the following claims.

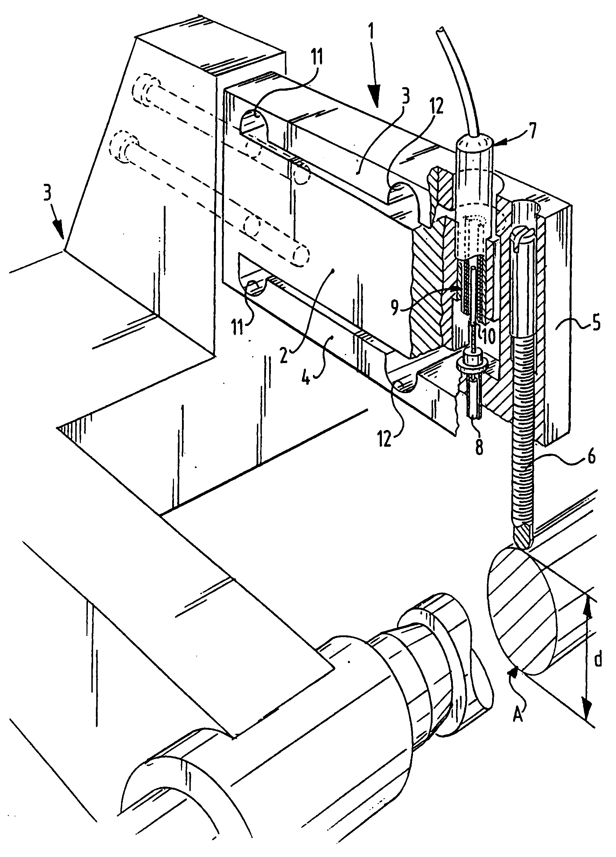

## Claims

1. A device for measuring or sensing an object (A), for example a shaft, comprising: a supporting element (1) including a fixed part (2) securable in a fixed position relative to the object, two arms (3, 4) which are slightly spring moveable relative to the fixed part (2) and which extend on both sides of the fixed part, a connecting part (5) connecting said two arms, and a measuring or sensing element comprising two parts (8, 9), a first (9) of said parts being coupled to the fixed part (2) of the supporting element, characterised in that:
- said two arms together with the fixed part are formed from one piece;
- the second part (8) of said measuring or sensing element is secured to one of the arms; and
- an adjustable pin (6) is secured within the connecting part near to and substantially parallel to the measuring or sensing element.

2. A measuring device according to claim 1, wherein the shape of the arms (3,4) is mirror symmetric with respect to the median plane of the fixed part (2).

3. A measuring device according to claim 1 or 2, wherein said arms are provided with one or more openings or recesses (11,12).

4. A measuring device according to claim 1, 2 or 3, wherein the arms (3,4), in front view, form a parallelogram or rectangle.

## Patentansprüche

1. Einrichtung zum Messen oder Abtasten eines Gegenstands (A), beispielsweise einer Welle, mit einem Trägerelement (1), welches ein feststehendes Teil (2) aufweist, welches in einer relativ zu dem Gegenstand feststehenden Position befestigbar ist, zwei Armen (3, 4), welche relativ zu dem feststehenden Teil (2) geringfügig federnd bewegbar sind und sich an beiden Seiten des feststehenden Teils erstrecken, einem Verbindungsteil (5), welches die beiden Arme verbindet, und einem Meß- oder Sensorelement, welches zwei Teile (8, 9) aufweist, wobei ein erstes (9) dieser Teile mit dem feststehenden Teil (2) des Trägerelements verbunden ist,
dadurch gekennzeichnet, daß
- die zwei Arme zusammen mit dem feststehenden Teil einstückig ausgebildet sind;
- das zweite Teil (8) des Meß- oder Sensorelements an dem einen der Arme befestigt ist; und
- ein einstellbarer Bolzen (6) innerhalb des Verbindungsteils nahe an dem und im wesentlichen parallel zu dem Meß- oder Sensorelement angeordnet ist.

2. Meßeinrichtung nach Anspruch 1, wobei die Form der Arme (3, 4) in Bezug auf die Mittelebene des feststehenden Teils (2) spiegelsymmetrisch ist.

3. Meßeinrichtung nach Anspruch 1 oder 2, wobei die Arme mit einer oder mehreren Öffnungen oder Aussparungen (11, 12) versehen sind.

4. Meßeinrichtung nach Anspruch 1, 2 oder 3, wobei die Arme (3, 4) in der Vorderansicht ein Parallelogramm oder ein Rechteck bilden.

## Revendications

1. Dispositif pour mesurer ou pour détecter un objet (A), par exemple un arbre, comprenant : un élément de support (1) incluant une partie fixe (2) pouvant être solidement fixée dans une position fixe par rapport à l'objet, deux bras (3, 4) qui peuvent être légèrement mobiles par effet ressort par rapport à la partie fixe (2) et qui s'étendent sur les deux côtés de la partie fixe, une partie de connexion (5) reliant lesdits deux bras, et un élément de mesure ou de détection comprenant deux parties (8, 9), une première partie (9) desdites parties étant reliée à la partie fixe (2) de l'élément de support,
caractérisé en ce que :
- lesdits deux bras, en même temps que la partie fixe, sont formés à partir d'une seule pièce ;
- la seconde partie (8) dudit élément de mesure ou de détection est solidement fixée à l'un des bras ; et
- un ergot réglable (6) est solidement fixé à l'intérieur de la partie de connexion près de l'élément de mesure ou de détection, et sensiblement parallèlement à ce dernier.

2. Dispositif de mesure selon la revendication 1, dans lequel la forme des bras (3, 4) est en symétrie miroir par rapport au plan médian de la partie fixe (2).

3. Dispositif de mesure selon la revendication 1 ou 2, dans lequel lesdits bras sont munis d'une ou de plusieurs ouvertures ou parties en retrait (11, 12).

4. Dispositif de mesure selon la revendication 1, 2 ou 3, dans lequel les bras (3, 4), en vue de face, forment un parallélogramme ou un rectangle.
